# EUROPÄISCHE PATENTSCHRIFT

(11) **EP 1 373 029 B1**
(45) Veröffentlichungstag und Bekanntmachung des Hinweises auf die Patenterteilung: **08.06.2005**
(21) Anmeldenummer: 02735206.1
(22) Anmeldetag: 02.04.2002
(51) Int. Cl.: B60R 21/20

(54) **GASSACKMODUL FÜR EIN FAHRZEUGINSASSEN-RÜCKHALTESYSTEM**
GAS BAG MODULE FOR A VEHICLE OCCUPANT RESTRAINT SYSTEM
MODULE DE SAC GONFLABLE POUR SYSTEME DE RETENUE D'OCCUPANTS DE VEHICULE

(30) Priorität: 02.04.2001 DE 20105734 U
(43) Veröffentlichungstag der Anmeldung: 02.01.2004
(73) Patentinhaber: TRW Automotive GmbH, 73553 Alfdorf (DE)
(72) Erfinder: FISCHER, Anton, 73579 Leinweiler (DE)
(74) Vertreter: Kitzhofer, Thomas, Dipl.-Ing.
(86) Internationale Anmeldenummer: PCT/EP2002/003639
(87) Internationale Veröffentlichungsnummer: WO 2002/079008

(56) Entgegenhaltungen:
- EP-A- 0 855 316
- DE-A- 19 731 729
- DE-U- 29 916 177
- US-A- 6 073 961

## Beschreibung

### Gebiet der Erfindung

Die Erfindung betrifft ein Gassackmodul für ein FahrzeuginsassenRückhaltesystem, mit einem Gassack und einem langgestreckten Gasgenerator, der mit einem Abschnitt in den Gassack hineinragt.

### Hintergrund der Erfindung

Ein Gassackmodul nach dem Oberbegriff des Anspruchs 1 ist aus EP 855 316 A und DE 29916 177 U bekannt.

Um den Gassack eines Fahrzeuginsassen-Rückhaltesystems im Ernstfall schnell zu befüllen, wird das vom Gasgenerator erzeugte heiße Gas oft durch spezielle Gasfübrungen in den Gassack geleitet. Diese Gasführungen dienen auch dazu, das Gassackgewebe vor den heißen Gasen zu schützen. Allerdings verteuern spezielle Gasführungen die Herstellung des Gassackmoduls.

Ein Ziel der Erfindung ist es daher, ein einfaches und kostengünstiges Gassackmodul zu schaffen, bei dem ein sicheres und schnelles Aufblasen des Gassacks gewährleistet ist.

### Zusammenfassung der Erfindung

Dies wird bei einem oben genannten Gassackmodul dadurch erreicht, daß ein Teil der Halterung in den Gassack hineinragt und den in den Gassack ragenden Abschnitt des Gasgenerators wenigstens abschnittsweise umgibt. Der Teil der Halterung, der in den Gassack hineinragt, kann verschiedene Aufgaben erfüllen. So kann er z.B. zur Fixierung des Gasgenerators in der Halterung herangezogen werden. Er kann aber auch die Funktion einer Gasführung erfüllen und die Teile der Wandung des Gassacks, die in unmittelbarer Nähe zum Gasgenerator liegen, vor Beschädigung durch heißes Gas schützen. Die besondere Gestaltung der Halterung erlaubt es daher, das Gassackmodul sehr flexibel an verschiedene Einsatzzwecke anpassen zu können. Da weder eine separate Gasführung noch ein Gehäuse für den Gasgenerator benötigt werden, können Bauteile eingespart werden, die die Herstellung des Gassackmoduls verteuern würden.

Der in den Gassack hineinragende Teil der Halterung schützt bevorzugt Wandungsteile des Gassacks vor einem direkten Anströmen mit heißem Gas aus dem Gasgenerator, so daß eine Beschädigung vor allem derjenigen Teile des Gassacks vermieden werden kann, die zu Beginn der Entfaltung des Gassacks in direkter Nähe zum Gasgenerator angeordnet sind.

In einer bevorzugten Ausführungsform der Erfindung wird ein Teil der Abströmöffnungen des Gasgenerators durch den in den Gassack hineinragenden Teil der Halterung verschlossen. Diese Ausführungsform ist vor allem deshalb vorteilhaft, da ein bekannter schubneutraler Gasgenerators, dessen Abströmöffnungen so angeordnet sind, daß der durch austretendes Gas verursachte Impuls Null ist, eingesetzt werden kann.

In einer anderen bevorzugten Ausfuhrungsform der Erfindung ist der in den Gassack hineinragende Teil der Halterung in radialer Richtung vom Gasgenerator beabstandet. Auf diese Weise kann Gas aus allen Ausströmöffnungen des Gasgenerators ausströmen, um schnell die notwendige Gasmenge zur Befüllung des Gassacks bereitzustellen. Da der Anteil des Gases, der aus den Ausströmöffnungen austritt, die zum im Gassackinneren angeordneten Teil der Halterung gerichtet sind, an der Halterung umgelenkt wird, besteht trotzdem keine Gefahr eines Beschädigung der Gassackwandungen.

Bevorzugt ist der Gassack ein Seitenscheiben eines Fahrzeugs abdeckender Seitengassack. Der Gasgenerator ist bezogen auf eine Haupterstreckungsrichtung des Gassacks in etwa der Mitte des Gassacks, vorzugsweise am oberen Rand des Gassacks angeordnet. Da durch den in den Gassack hineinragenden Teil der Halterung die Ausströmrichtung des Gases aus dem Gasgenerator senkrecht zu dessen Längsachse ins Innere des Gassacks umgelenkt wird, kann mit dieser Anordnung ein Gassack schnell und gleichmäßig befüllt werden.

Aus Gründen der einfachen und kostengünstigen Fertigung ist die Halterung vorzugsweise aus Blech gefertigt.

Vorteilhaft weist der Gassack eine Öffnung auf, durch die der Abschnitt des Gasgenerators in den Gassack hineinragt, und der Rand der Öffnung ist mit einer Schelle an der Halterung und am Gasgenerator befestigt. So lassen sich gleichzeitig der Gassack und der Gasgenerator einfach und sicher an der Halterung befestigen.

In einer weiteren vorteilhaften Ausführungsform der Erfindung ist der Gassack mit einer Schutzlage versehen, die einen aus dem Gasgenerator ausströmenden Gasstrom vom direkten Kontakt mit Wänden des Gassacks abhält. Die Schutzlage lenkt den Gasstrom bevorzugt um etwa 90° um. Bevorzugt ist die Schutzlage einteilig ausgeführt. In Kombination mit der speziellen Halterung des Gasgenerators läßt sich einfach und kostengünstig eine Beschädigung des Gassacks durch das heiße Gas vermeiden.

In den Unteransprüchen sind weitere vorteilhafte Merkmale der Erfindung aufgeführt.

Weitere Vorteile und Merkmale der Erfindung werden auch aus der nachfolgenden Beschreibung einer Ausführungsform mit Bezug auf die beigefügten Zeichnungen deutlich.

### Kurze Beschreibung der Zeichnungen

- Figur 1 zeigt eine Teilansicht eines erfindungsgemäßen Gassackmoduls;
- Figuren 2a-c zeigen in einer Schnittansicht entlang der Linie I-I aus Figur 1 verschiedene Anordnungen einer Schutzlage in einem erfindungsgemäßen Gassackmodul;
- Figur 3 zeigt eine schematische Ansicht einer Schutzlage zur Verwendung in einem erfindungsgemäßen Gassackmodul;
- Figuren 4 und 5 zeigen einen schematischen Schnitt entlang der Linie A-A bzw. B-B aus Figur 3 bei einer ersten Variante der Schutzlage; und
- Figuren 6 und 7 zeigen einen schematischen Schnitt entlang der Linie A-A bzw. B-B aus Figur 3 bei einer zweiten Variante der Schutzlage.

### Ausführliche Beschreibung mehrerer Ausführungsformen der Erfindung

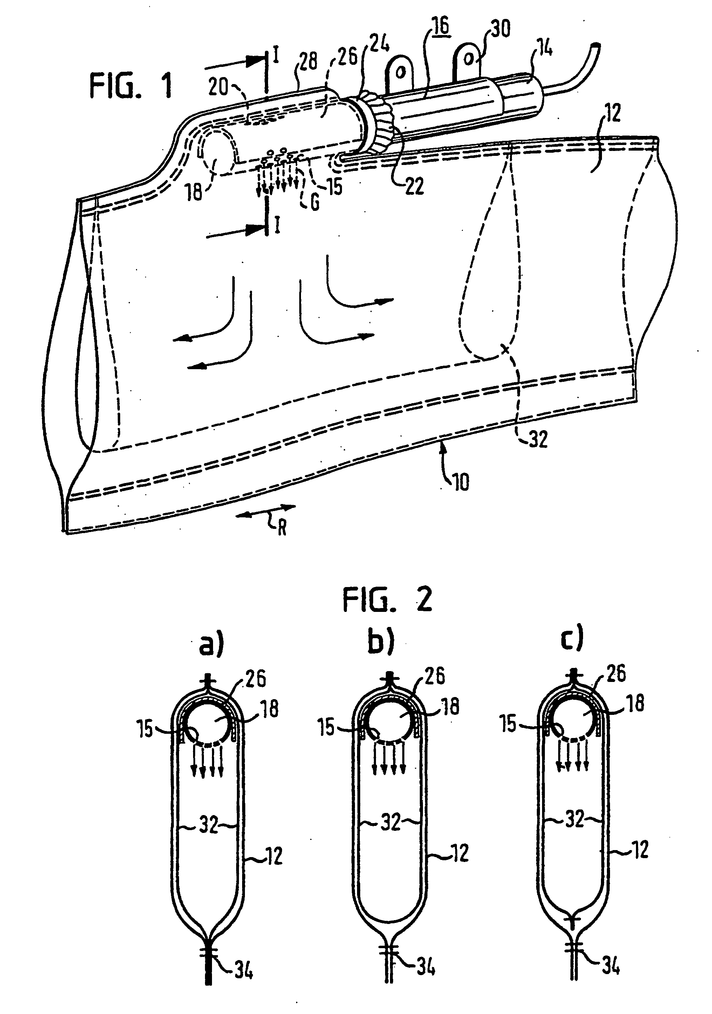

Das in Figur 1 dargestellte Gassackmodul 10 enthält einen Seitengassack 12, der sich vorzugsweise von der A-Säule bis zur C-Säule eines Fahrzeugs erstreckt, um Seitenscheiben abzudecken. Außerdem enthält das Modul einen Gasgenerator 14, der bevorzugt ein langgestreckter, schubneutral ausgeführter Rohrgäsgenerator mit entlang seiner Umfangsfläche angeordneten Ausströmöffnungen 15 ist. Das Gassackmodul 10 enthält auch eine Halterung 16, die sich entlang des Gasgenerators 14 erstreckt.

Der Gasgenerator 14 ragt mit einem Abschnitt 18 durch eine Öffnung des Gassacks 12 in den Gassack 12 hinein. Der Abschnitt 18 ist vorteilhaft so lang gewählt, daß sich sämtliche Ausströmöffnungen 15 des Gasgenerators 14 im Inneren des Gassacks 12 befinden.

Die Halterung 16 erstreckt sich über einen Großteil der axialen Länge des Gasgenerators 14, in der gezeigten Ausführungsform etwa über vier Fünftel der Länge des Gasgenerators 14. Ein Teil 26 der Halterung 16 ragt durch die Öffnung in den Gassack 12 hinein. Eine Schelle 24 befestigt den Rand 22 der Öffnung des Gassacks sowohl an der Halterung 16 als auch am Gasgenerator 14. Der Teil 26 ist U-förmig gebogen und zwischen dem Gasgenerator 14 und dem oberen Rand 28 des Gassacks 12 angeordnet. Die Länge des Teils 26 entspricht in etwa der Länge des Abschnitts 18 des Gasgenerators.

Der Teil 26 der Halterung 16 deckt einen Teil der Ausströmöffnungen 15 des Gasgenerators 14 ab, so daß bei Aktivierung des Gasgenerators 14 Gas nur aus den zum Gassackinneren gerichteten Ausströmöffnungen 15 austreten kann. Der Teil 26 der Halterung 16 liegt direkt am Abschnitt 18 des Gasgenerators 14 an, um, zusätzlich zu seiner Schutzfunktion, eine gute Fixierung des Gasgenerators 14 in der Halterung 16 zu erreichen.

Der außerhalb des Gassacks 12 liegende Teil der Halterung 16 weist zwei laschenförmige Befestigungselemente 30 auf, mit denen die Halterung und somit der Gasgenerator 14 an einem Fahrzeugteil (nicht gezeigt) befestigt werden kann. Da die Halterung 16 den Gasgenerator 14 wenigstens abschnittsweise umgreift, ist eine Befestigung des Gasgenerators 14 an der Halterung 16 über die Schelle 24 ausreichend. Es können jedoch auch weitere Befestigungselemente vorgesehen sein, um den Gasgenerator 14 an der Halterung 16 zu befestigen.

Der Gasgenerator 14 ist in etwa in der Mitte des oberen Randes 28 des Gassacks 12 angeordnet, bezogen auf die Haupterstreckungsrichtung R des Gassacks. Der Gasgenerator 14 ist in etwa parallel zur Haupterstreckungsrichtung R angeordnet.

In einer alternativen, nicht dargestellten Ausführungsform kann ein kleiner radialer Abstand zwischen dem in den Gassack hineinragenden Teil der Halterung und den Ausströmöffnungen des Gasgenerators vorgesehen sein, so daß Gas aus allen Ausströmöffnungen ausströmen kann. Ein Anteil des Gases wird dann am Teil der Halterung umgelenkt und der Gasstrom in Pfeilrichtung in das Innere des Gassacks geführt.

In der gezeigten Ausführungsform ist im Gassack 12 außerdem eine textile Schutzlage 32 angeordnet. Die Schutzlage 32 kann sich über einen beträchtlichen Teil in der Haupterstreckungsrichtung R des Gassacks 12 erstrecken. Die Schutzlage 32 ist vorzugsweise einstückig und am oberen Rand 28 des Gassacks 12 fixiert. Wie in Figur 2a gezeigt ist, kann die Schutzlage 32 zusätzlich noch am unteren Rand 34 des Gassacks 12 befestigt werden. Alternativ kann die Schutzlage 32 auch, wie in Figur 2c gezeigt ist, aus zwei im Bereich des unteren Randes des Gassacks 12 miteinander vernähten Teilen bestehen.

Die Schutzlage 32 lenkt den aus dem Gasgenerator 14 ausströmende heißen Gasstrom G um etwa 90° in die Haupterstreckungsrichtung um und teilt ihn auf. Auch durch die Schutzlage 32 wird ein direktes Anströmen der Wandungen des Gassacks 12 vermieden und einer Beschädigung des Gassacks vorgebeugt.

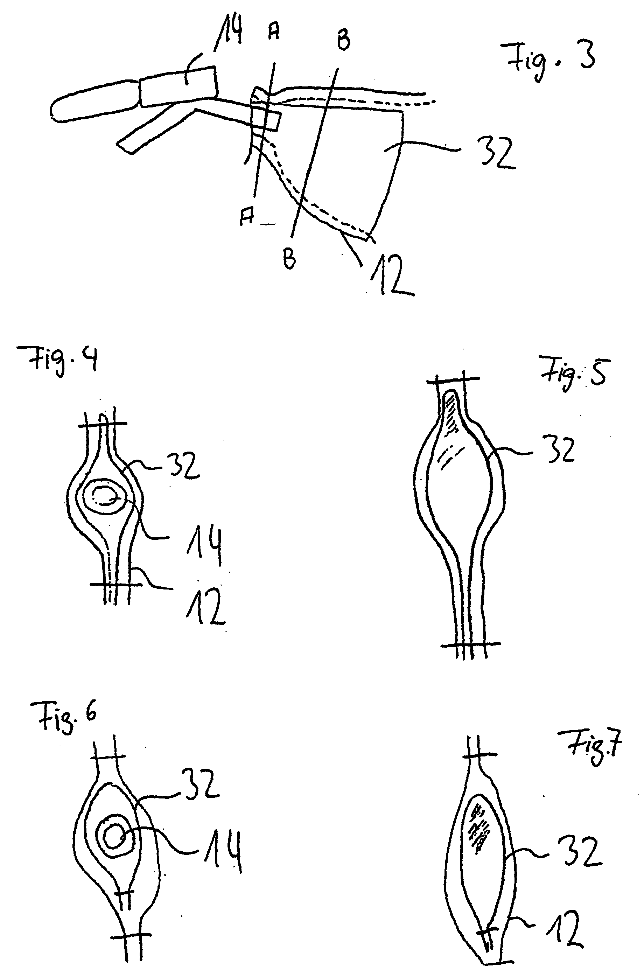

Eine derartige-Schutzlage 32 soll nach Möglichkeit auch vermeiden, daß heißes Gas an die Nähte des Gassacks 12 gelangt. In den Figuren 3 bis 7 sind mögliche Varianten der Anordnung der Schutzlage 32 dargestellt. Die Schutzlage 32 bildet einen Schlauch, der sich vom Gasgenerator in das Innere des Gassacks 12 erstreckt. Um die bei montiertem Gassack oben liegende Naht zu schützen, ist bei dem in den Figuren 4 und 5 gezeigten Beispiel die Schutzlage 32 im Bereich der oberen Naht nicht mit dem Gassack 12 verbunden. Im Bereich des Gasgenerators kann eine Verbindung mit dem Gassack vorgesehen sein.

Es ist aber auch möglich, wie in den Figuren 6 und 7 dargestellt, die Schutzlage 32 gar nicht mit dem Gassack zu verbinden, sondern z.B. nur am Gasgenerator oder dessen Halterung zu befestigen. So sind alle Nähte des Gassacks im Bereich der Schutzlage 32 geschützt.

## Patentansprüche

1. Gassackmodul für ein Fahrzeuginsassen-Rückhaltesystem, mit einem Gassack (12) und einem langgestreckten Gasgenerator (14), der mit einem Abschnitt (18) in den Gassack (12) hineinragt, wobei eine sich entlang eines wesentlichen Teils der axialen Länge des Gasgenerators (14) erstreckende Halterung (16) für den Gasgenerator (14) vorgesehen ist und wobei ein sich außerhalb des Gassacks (12) erstreckender Teil der Halterung (16) Befestigungselemente (30) zur Befestigung an einem Fahrzeugteil aufweist, **dadurch gekennzeichnet, daß** ein Teil (26) der Halterung (16) in den Gassack hineinragt (12) und den in den Gassack (12) ragenden Abschnitt (18) des Gasgenerators (14) wenigstens abschnittsweise umgibt.

2. Gassackmodul nach Anspruch 1, **dadurch gekennzeichnet, daß** der in den Gassack (12) hineinragende Teil (26) der Halterung (16) Wandungsteile des Gassacks (12) vor einem direkten Anströmen durch einen heißen Gasstrom (G) aus dem Gasgenerator (14) schützt.

3. Gassackmodul nach Anspruch 2, **dadurch gekennzeichnet, daß** der in den Gassack (12) hineinragende Teil (26) der Halterung (16) in radialer Richtung vom Gasgenerator (14) beabstandet ist.

4. Gassackmodul nach einem der vorhergehenden Ansprüche, **dadurch gekennzeichnet, daß** der Gasgenerator (14) schubneutral ausgeführt ist.

5. Gassackmodul nach einem der vorhergehenden Ansprüche, **dadurch gekennzeichnet, daß** ein Teil der Abströmöffnungen (15) des Gasgenerators (14) durch den in den Gassack (12) hineinragenden Teil (26) der Halterung (16) verschlossen ist.

6. Gassackmodul nach einem der vorhergehenden Ansprüche, **dadurch gekennzeichnet, daß** der Gassack ein Seitenscheiben eines Fahrzeugs abdeckender Seitengassack ist und der Gasgenerator (14) bezogen auf eine Haupterstreckungsrichtung (R) des Gassacks (14) in etwa in der Mitte des Gassacks (12) angeordnet ist.

7. Gassackmodul nach einem der vorhergehenden Ansprüche, **dadurch gekennzeichnet, daß** der Gassack (12) eine Öffnung aufweist, durch die der Abschnitt (18) des Gasgenerators (14) in den Gassack (12) hineinragt, und daß der Rand (22) der Öffnung mit einer Schelle (24) an der Halterung (16) und am Gasgenerator (14) befestigt ist.

8. Gassackmodul nach einem der vorhergehenden Ansprüche, **dadurch gekennzeichnet, daß** der Gassack (12) mit einer Schutzlage (32) versehen ist, die einen heißen Gasstrom (G) vom direkten Kontakt mit Wänden des Gassacks (12) abhält.

9. Gassackmodul nach Anspruch 8, **dadurch gekennzeichnet, daß** die Schutzlage (32) den Gasstrom (G) um etwa 90° umlenkt.

10. Gassackmodul nach einem der vorhergehenden Ansprüche, **dadurch gekennzeichnet, daß** der Gassack (12) ein Seitengassack ist, der sich im wesentlichen von einer A-Säule bis zu einer C-Säule eines Fahrzeugs erstreckt.

## Claims

1. A gas bag module for a vehicle occupant restraint system, comprising a gas bag (12) and an elongated gas generator (14) having a section (18) which projects into the gas bag (12), a mounting (16) extending along a substantial portion of the axial length of the gas generator (14) being provided for the gas generator (14), and a part of the mounting (16) extending outside the gas bag (12) having fastening elements (30) for fastening to a vehicle part, **characterized in that** a part (26) of the mounting (16) projects into the gas bag (12) and at least partly surrounds the section (18) of the gas generator (14) which projects into the gas bag (12).

2. The gas bag module according to Claim 1, **characterized in that** the part (26) of the mounting (16) projecting into the gas bag (12) protects wall parts of the gas bag (12) from being directly impinged by a hot gas stream (G) from the gas generator (14).

3. The gas bag module according to Claim 2, **characterized in that** the part (26) of the mounting (16) projecting into the gas bag (12) is radially spaced apart from the gas generator (14).

4. The gas bag module according to any of the preceding claims, **characterized in that** the gas generator (14) is constructed so as to be neutral with respect to thrust.

5. The gas bag module according to any of the preceding claims, **characterized in that** part of the outflow openings (15) of the gas generator (14) are closed off by the part (26) of the mounting (16) projecting into the gas bag (12).

6. The gas bag module according to any of the preceding claims, **characterized in that** the gas bag is a side gas bag covering side windows of a vehicle, and the gas generator (14) is arranged approximately in the middle of the gas bag (12) as related to a main direction of extent (R) of the gas bag (12).

7. The gas bag module according to any of the preceding claims, **characterized in that** the gas bag (12) has an opening through which the section (18) of the gas generator (14) projects into the gas bag (12) and that the rim (22) of the opening is fastened with a clip (24) to the mounting (16) and to the gas generator (14).

8. The gas bag module according to any of the preceding claims, **characterized in that** the gas bag (12) is provided with a protective layer (32) which keeps a hot gas stream (G) from direct contact with walls of the gas bag (12).

9. The gas bag module according to Claim 8, **characterized in that** the protective layer (32) deflects the gas stream (G) through approximately 90°.

10. The gas bag module according to any of the preceding claims, **characterized in that** the gas bag (12) is a side gas bag which extends substantially from an A-column to a C-column of a vehicle.

## Revendications

1. Module de coussin à gaz pour un système de retenue de passager de véhicule, comportant un coussin à gaz (12) et un générateur de gaz (14) allongé qui fait saillie avec un tronçon (18) dans le coussin à gaz (12), une monture (16) s'étendant le long d'une partie essentielle de la longueur axiale du générateur de gaz (14) étant prévue pour le générateur de gaz (14) et une partie de la monture (16), qui s'étend en dehors du générateur de gaz (12), comprenant des éléments de fixation (30) pour la fixation sur une partie de véhicule, **caractérisé en ce qu'**une partie (26) de la monture (16) fait saillie dans le coussin à gaz (12) et entoure au moins partiellement le tronçon (18) du générateur de gaz (14) qui fait saillie dans le coussin à gaz (12).

2. Module de coussin à gaz selon la revendication 1, **caractérisé en ce que** la partie (26) de la monture (16), qui fait saillie dans le coussin à gaz (12), protège des parties de paroi du coussin à gaz (12) vis-à-vis du soufflage direct par un flux de gaz (G) chaud provenant du générateur de gaz (14).

3. Module de coussin à gaz selon la revendication 2, **caractérisé en ce que** la partie (26) de la monture (16), qui fait saillie dans le coussin à gaz (12), est à distance du générateur de gaz (14) en direction radiale.

4. Module de coussin à gaz selon l'une des revendications précédentes, **caractérisé en ce que** le générateur de gaz (14) est réalisé neutre du point de vue poussée.

5. Module de coussin à gaz selon l'une des revendications précédentes, **caractérisé en ce qu'**une partie des orifices d'échappement (15) du générateur de gaz (14) est fermée par la partie (26) de la monture (16) qui fait saillie dans le coussin à gaz (12).

6. Module de coussin à gaz selon l'une des revendications précédentes, **caractérisé en ce que** le coussin à gaz est un coussin à gaz latéral recouvrant des fenêtres latérales d'un véhicule et le générateur de gaz (14) est agencé approximativement au milieu du coussin à gaz (12) par rapport à une direction d'extension principale (R) du coussin à gaz (12).

7. Module de coussin à gaz selon l'une des revendications précédentes, **caractérisé en ce que** le coussin à gaz (12) présente une ouverture à travers laquelle le tronçon (18) du générateur de gaz (14) fait saillie dans le coussin à gaz (12), et **en ce que** le bord (22) de l'ouverture est fixé par un collet de serrage (24) sur la monture (16) et sur le générateur de gaz (14).

8. Module de coussin à gaz selon l'une des revendications précédentes, **caractérisé en ce que caractérisé en ce que** le coussin à gaz (12) est pourvu d'une couche de protection (32) qui empêche le flux de gaz (G) chaud de venir en contact direct avec les parois du coussin à gaz (12).

9. Module de coussin à gaz selon la revendication 8, **caractérisé en ce que** la couche de protection (32) dévie le flux de gaz (G) d'environ 90°.

10. Module de coussin à gaz selon l'une des revendications précédentes, **caractérisé en ce que** le coussin à gaz (12) est un coussin à gaz latéral qui s'étend sensiblement depuis une colonne A jusqu'à une colonne C d'un véhicule.
